# EUROPÄISCHE PATENTSCHRIFT

(11) **EP 2 300 786 B1**
(45) Veröffentlichungstag und Bekanntmachung des Hinweises auf die Patenterteilung: **04.09.2019**
(21) Anmeldenummer: 09780206.0
(22) Anmeldetag: 07.07.2009
(51) Int. Cl.: G01F 1/66

(54) **ULTRASCHALLSENSOR EINES MESSSYSTEMS ZUR BESTIMMUNG UND/ODER ÜBERWACHUNG DES DURCHFLUSSES EINES MESSMEDIUMS DURCH EIN MESSROHR**
ULTRASONIC SENSOR OF A MEASURING SYSTEM FOR DETERMINING AND/OR MONITORING THE FLOW RATE OF A MEASUREMENT MEDIUM THROUGH A MEASURING TUBE
CAPTEUR ULTRASONIQUE D'UN SYSTÈME DE MESURE PERMETTANT LA DÉTERMINATION ET/OU LA SURVEILLANCE DU DÉBIT D'UN MILIEU DE MESURE À TRAVERS UN TUBE DE MESURE

(30) Priorität: 23.07.2008 DE 102008034412
(43) Veröffentlichungstag der Anmeldung: 30.03.2011
(73) Patentinhaber: Endress+Hauser Flowtec AG, 4153 Reinach (CH)
(72) Erfinder: BERGER, Andreas, 79686 Hasel-Glashütten (DE); WIEST, Achim, 79576 Weil am Rhein (DE)
(74) Vertreter: Andres, Angelika Maria
(86) Internationale Anmeldenummer: PCT/EP2009/058539
(87) Internationale Veröffentlichungsnummer: WO 2010/009974

(56) Entgegenhaltungen:
- EP-A1- 1 248 081
- EP-A1- 1 396 707
- EP-A2- 1 840 528
- US-A- 5 131 278
- US-B1- 6 397 683

## Beschreibung

Die vorliegende Erfindung betrifft einen Ultraschallsensor eines Messsystems zur Bestimmung und/oder Überwachung des Durchflusses eines Messmediums durch ein Messrohr, welcher Ultraschallsensor in einem Sensorgehäuse, parallel zu einer ersten Innenfläche des Sensorgehäuses verschiebbar gelagert ist und welcher Ultraschallsensor ein Koppelelement und ein elektromechanisches Ultraschall-Wandlerelement aufweist.

Ultraschall-Durchflussmessgeräte werden vielfach in der Prozess- und Automatisierungstechnik eingesetzt. Sie erlauben in einfacher Weise, den Volumendurchfluss und/oder Massendurchfluss in einer Rohrleitung zu bestimmen.

Die bekannten Ultraschall-Durchflussmessgeräte arbeiten häufig nach dem Doppler- oder nach dem Laufzeitdifferenz-Prinzip.

Beim Laufzeitdifferenz-Prinzip werden die unterschiedlichen Laufzeiten von Ultraschallimpulsen relativ zur Strömungsrichtung der Flüssigkeit ausgewertet.

Hierzu werden Ultraschallimpulse in einem bestimmten Winkel zur Rohrachse sowohl mit als auch entgegen der Strömung gesendet. Aus der Laufzeitdifferenz lässt sich die Fließgeschwindigkeit und damit bei bekanntem Durchmesser des Rohrleitungsabschnitts der Volumendurchfluss bestimmen.

Beim Doppler-Prinzip werden Ultraschallwellen mit einer bestimmten Frequenz in die Flüssigkeit eingekoppelt und die von der Flüssigkeit reflektierten Ultraschallwellen ausgewertet. Aus der Frequenzverschiebung zwischen den eingekoppelten und reflektierten Wellen lässt sich ebenfalls die Fließgeschwindigkeit der Flüssigkeit bestimmen.

Reflexionen in der Flüssigkeit treten jedoch nur auf, wenn Luftbläschen oder Verunreinigungen in dieser vorhanden sind, so dass dieses Prinzip hauptsächlich bei verunreinigten Flüssigkeiten Verwendung findet.

Die Ultraschallwellen werden mit Hilfe so genannter Ultraschallsensoren erzeugt bzw. empfangen. Hierfür sind Ultraschallsensoren an der Rohrwandung des betreffenden Rohrleitungsabschnitts fest angebracht. Seit neuerem sind auch Clamp-on-Ultraschall-Durchflussmesssysteme erhältlich. Bei diesen Systemen werden die Ultraschallsensoren nur noch mit einem Spannverschluss an die Rohrwandung gepresst. Derartige Systeme sind z. B. aus der EP 686 255 B1, US-A 44 84 478 oder US-A 45 98 593 bekannt.

Ein weiteres Ultraschall-Durchflussmessgerät, das nach dem Laufzeitdifferenz-Prinzip arbeitet, ist aus der US-A 50 52 230 bekannt. Die Laufzeit wird hier mittels kurzen Ultraschallimpulsen ermittelt.

Ein großer Vorteil von Clamp-On-Ultraschall-Durchflussmesssystemen ist, dass sie das Messmedium nicht berühren und auf eine bereits bestehende Rohrleitung angebracht werden. Nachteilig ist ein hoher Aufwand bei der Montage der Clamp-On-Systeme, um die einzelnen Ultraschallsensoren gegenseitig auszurichten, was von vielen Parametern, wie z.B. Rohrwanddicke, Rohrdurchmesser, Schallgeschwindigkeit im Messmedium, abhängt.

Die Ultraschallsensoren bestehen normalerweise aus einem elektromechanischen Wandler, in der industriellen Prozessmesstechnik meist eine Piezokeramik, und einer Koppelschicht, auch Koppelkeil oder seltener Vorlaufkörper genannt. Die Koppelschicht ist dabei meist aus Kunststoff gefertigt. Im elektromechanischen Wandlerelement werden die Ultraschallwellen erzeugt und über die Koppelschicht zur Rohrwandung geführt und von dort in die Flüssigkeit geleitet. Da die Schallgeschwindigkeiten in Flüssigkeiten und Kunststoffen unterschiedlich sind, werden die Ultraschallwellen beim Übergang von einem zum anderen Medium gebrochen. Der Brechungswinkel bestimmt sich in erster Näherung nach dem Snell'schen Gesetz. Der Brechungswinkel ist somit abhängig von dem Verhältnis der Ausbreitungsgeschwindigkeiten in den Medien.

Zwischen dem piezoelektrischen Element und der Koppelschicht kann eine weitere Koppelschicht angeordnet sein, eine so genannte Anpassungsschicht. Die Anpassungsschicht übernimmt dabei die Funktion der Transmission des Ultraschallsignals und gleichzeitig die Reduktion einer durch unterschiedliche akustische Impedanzen verursachte Reflektion an Grenzschichten zwischen zwei Materialen.

Die US 6,397,683 B1 zeigt zwei Clamp-On-Ultraschallsensoren, die auf einer Rohrleitung mittels zweier Fixierbänder festschnallbar sind. Zum Verstellen des Abstsnds der beiden Sensoren, ist mindestens ein Sensor von der Rohrleitung zu lösen. Ebenfalls ist dessen Fixierband zu lösen. Beides ist nach einer Neuausrichtung wieder festzustellen. Das Koppelelement eines der Ultraschallsensoren ist zusammen mit dem auf ihm aufgebrachten piezoelektrischen Ultraschall-Wandlerelement in einem Gehäuse federnd gelagert.

Die US 5,131,278 zeigt eine mögliche Ausführung, zwei Ultraschallsensoren auf einer Schiene, welche auf dem Messrohr fest anbringbar ist, verschiebbar zu lagern.

Eine Schiene zur verschiebbaren Befestigung von Ultraschallsensoren ist ebenfalls in der EP 1 396 707 A1 und der EP 1 840 528 A2 dargestellt. Die Sensoren sind dabei federnd in der Schiene gelagert.

In der EP 1 783 464 A2 ist ein Führungsrahmen als Sensorhalteeinrichtung offenbart, welcher mittels zweier Befestigungseinrichtungen auf dem Messrohr befestigbar ist. Ein Gehäuse wird zum Schutz der Sensoren darüber gestülpt. Zur Wartung und Verschiebung der Sensoren muss das Gehäuse abgenommen werden.

Allen genannten Schriften gemein ist, dass die Sensoren während des Messbetriebs verschiebbar sind. Die Haltevorrichtungen sind dabei so ausgestaltet, dass nach ihrer Befestigung auf dem Messrohr die Sensoren in die gewünschte Position verschiebbar sind. Um die Sensoren vor mechanischen Einflüssen von außen zu schützen sind teilweise separat anzubringende Schutzgehäuse vorgesehen. Gleichzeitig sind die Sensoren in ihren Messpositionen durch zusätzliche mechanische Bauteile festgestellt. Diese Feststellung ist separat zu lösen, bevor eine Verstellung vorgenommen werden kann.

Die Aufgabe der Erfindung besteht darin einen Ultraschallsensor bereit zu stellen, dessen Position auf einem Messrohr sehr leicht und schnell veränderbar ist.

Die Aufgabe wird gelöst durch einen Ultraschallsensor eines Messsystems zur Bestimmung und/oder Überwachung des Durchflusses eines Messmediums durch ein Messrohr, welcher Ultraschallsensor in einem Sensorgehäuse, parallel zu einer ersten Innenfläche des Sensorgehäuses verschiebbar gelagert ist und welcher Ultraschallsensor ein Koppelelement und ein elektromechanisches Ultraschall-Wandlerelement aufweist, wobei der Ultraschallsensor an der ersten Innenfläche des Sensorgehäuses zumindest teilweise anlegbar ist und dass ein Führungsbügel an einer der ersten Innenfläche gegenüberliegenden zweiten Innenfläche des Sensorgehäuses zumindest teilweise anliegt, wobei der Ultraschallsensor im Wesentlichen senkrecht zur ersten Innenfläche in dem Führungsbügel verschiebbar gelagert ist, wobei eine Feder zwischen Führungsbügel und Ultraschallsensor im Wesentlichen senkrecht zur ersten Innenfläche wirkt. Erste und zweite Innenfläche des Sensorgehäuses stehen dabei im Wesentlichen senkrecht aufeinander. Durch die Feder ist also eine Kraft auf den Führungsbügel und den Ultraschallsensor im Wesentlichen in Richtung senkrecht zu der ersten und zweiten Innenfläche des Sensorgehäuses aufbringbar. Der Ultraschallsensor ist in dem Führungsbügel im Wesentlichen senkrecht zur ersten Innenfläche des Sensorgehäuses verschiebbar gelagert. Somit liegt der Ultraschallsensor in einem ersten Zustand an der Innenfläche des Sensorgehäuses an, in einem zweiten Zustand, insbesondere bei eingefederter Feder, berührt der Ultraschallsensor die erste Innenfläche des Sensorgehäuses nicht. Der Ultraschallsensor ist daher an der ersten Innenfläche des Sensorgehäuses zumindest teilweise, zumindest zeitweise anlegbar.

Der Ultraschallsensor ist im Wesentlichen entlang einer Geraden verschiebbar, welche parallel zur ersten Innenfläche des Sensorgehäuses steht. Ist das Sensorgehäuse länglich ausgestaltet verläuft diese Gerade in Richtung der länglichen Ausdehnung des Sensorgehäuses.

In einer Ausgestaltung eines im Sensorgehäuse axial verschiebbar gelagerten Ultraschallsensors wird der Ultraschallsensor in einer Nut geführt, welche Nut in die erste Innenfläche des Sensorgehäuses eingelassen ist. Entlang dieser Nut ist der Ultraschallsensor verschiebbar, in welche Nut der Ultraschallsensor zumindest teilweise hineinragt. Der Ultraschallsensor bildet eine Feder, welche in die Nut passt oder er selbst bildet die in der Nut, welche als Führungsschiene wirkt, die Feder. Eine andere Ausgestaltungsmöglichkeit sieht vor, dass der Ultraschallsensor eine Nut aufweist, und die erste Innenfläche des Sensorgehäuses weist die Feder auf. Das Sensorgehäuse weist in der ersten Innenfläche einen Spalt auf, in welchen Spalt der Ultraschallsensor zumindest teilweise hineinragt, wobei zumindest ein Teil des Koppelelements mit einer Fläche zur Ein- und/oder Auskopplung der Ultraschallsignale des Ultraschallsensors in den Spalt hineinragt. Ragt der Ultraschallsensor mit seinem Koppelelement teilweise in den Spalt hinein und soll das Koppelelement mit seiner Fläche zur Ein- und/oder Auskopplung der Ultraschallsignale mit dem Messrohr akustisch koppelbar sein, liegt die Fläche zur Ein- und/oder Auskopplung der Ultraschallsignale zumindest in einer Ebene mit der Außenfläche des Sensorgehäuses, welche Außenfläche zusammen mit der ersten Innenfläche des Sensorgehäuses einen Teil einer ersten Sensorgehäusewand begrenzt

Der Ultraschallsensor wird in einer weiteren Ausgestaltung aus mindestens fünf Raumrichtungen vom Sensorgehäuse umgeben.

In einer Ausgestaltung ragt das Koppelelement mit der Fläche zur Ein- und/oder Auskopplung der Ultraschallsignale zumindest teilweise aus dem Sensorgehäuse heraus, die Ultraschallein- und/oder -auskoppelfläche steht über die Außenfläche des Sensorgehäuses über.

Eine vorteilhafte Weiterbildung des erfindungsgemäßen Ultraschallsensors schlägt vor, dass das elektromechanische Ultraschall-Wandlerelement größer ist als die senkrecht auf das Ultraschall-Wandlerelement projizierte Fläche zur Ein- und/oder Auskopplung der Ultraschallsignale des Ultraschallsensors. Die Fläche des Ultraschall-Wandlerelements, welche zur Wandlung von Ultraschallsignalen in elektrische Signale und/oder umgekehrt nutzbar ist und welche senkrecht in Richtung der Signalabstrahlung und/oder Einstrahlung steht, ist größer als die senkrecht auf das Ultraschall-Wandlerelement projizierte Fläche zur Ein- und/oder Auskopplung der Ultraschallsignale des Ultraschallsensors.

Eine weitere vorteilhafte Weiterbildung des erfindungsgemäßen Ultraschallsensors sieht vor, dass die Federkraft der Feder so bemessen ist, dass der Ultraschallsensor von Hand verschiebbar ist.

Ist z.B. der Ultraschallsensor im montierten Zustand in Richtung der zweiten Innenfläche des Sensorgehäuses eine bestimmte Strecke in das Sensorgehäuse eingefedert, wirkt eine bestimmte erste Federkraft F₁ auf den Ultraschallsensor. Gleichzeitig wirkt diese Federkraft auf die zweite Innenfläche des Sensorgehäuses über den Führungsbügel. Führungsbügel und zweite Innenfläche des Sensorgehäuses bilden ein Reibflächenpaar. Die Reibflächen und die Federkraft sind so aufeinander abgestimmt, dass der Ultraschallsensor nicht über eine von Hand aufzubringende Kraft oder von einer Kraft die aus Vibrationen des Messrohrs herrühren entlang des Spalts verschiebbar ist. Ist in diesem Ausführungsbeispiel das Sensorgehäuse jedoch vom Messrohr abgenommen, befindet sich der Ultraschallsensor also nicht im montierten Zustand, und werden auch sonst keine Kräfte auf den Ultraschallsensor in Richtung der und senkrecht zur zweiten Innenfläche des Sensorgehäuses aufgebracht, liegt der Ultraschallsensor zumindest teilweise an der ersten Innenfläche des Sensorgehäuses an und die Feder bringt eine von der ersten Kraft F₁ verschiedene zweite Kraft F₂ auf den Ultraschallsensor und die zweite Innenfläche des Sensorgehäuses über den an dieser anliegenden Führungsbügel auf. F₂ ist kleiner als F₁. Nun sind die Reibflächen, also das Reibflächenpaar aus Führungsbügel und zweiter Innenfläche des Sensorgehäuses und das Reibflächenpaar aus Ultraschallsensor und erster Innenfläche des Sensorgehäuses, so aufeinander und mit der Federkraft abgestimmt, dass der Ultraschallsensor über eine von Hand aufzubringende Kraft entlang des Spalts verschiebbar ist. Es ist auch möglich die genannten Reibflächen und die Federkraft so abzustimmen, dass der Ultraschallwandler auch noch bei einer vorgebbaren Einfederung verschiebbar ist und/oder dass der Ultraschallwandler bei Anliegen an der ersten Innenfläche des Sensorgehäuses nicht durch eine Kraft verschiebbar ist, welche durch Vibrationen oder Beschleunigungskräfte durch unsachgemäße Handhabung am Sensorgehäuse hervorgerufen sind. So soll bspw. in dieser bestimmten Ausführungsform der Ultraschallsensor im Gehäuse bei Handhabung des Sensorgehäuses, z.B. bei der Montage des Sensorgehäuses oder bei Wartungsarbeiten am Ultraschallsensor, nicht verschiebbar sein.

Anstelle von auslegbaren Reibflächen sind in einer weiteren Ausführungsform zumindest teilweise und zumindest zeitweise ineinander greifende Zahnstangen vorgesehen. So sind z.B. auf der der ersten Innenfläche des Sensorgehäuses gegenüberliegenden Fläche des Ultraschallsensors Zähne einer Verzahnung aufgebracht. Eine entsprechende Verzahnung befindet sich auf der ersten Innenfläche des Sensorgehäuses. Wird der Ultraschallsensor in Richtung der zweiten Innenfläche des Sensorgehäuses, also in Richtung des vom Sensorgehäuse umschlossenen Innenraums z.B. manuell gedrückt, greifen die Zähne auf den beiden Flächen nicht ineinander und der Ultraschallsensor ist parallel zur ersten Innenfläche des Sensorgehäuses verschiebbar. Wird der Druck auf den Ultraschallsensor wieder gelöst und die Feder federt aus, wird der Ultraschallsensor in Richtung der ersten Innenfläche des Sensorgehäuses gedrückt und die Verzahnung greift, womit der Ultraschallsensor gegen Verschieben parallel zur ersten Innenfläche des Sensorgehäuses gesichert ist.

In einer besonders bevorzugten Ausgestaltung der Erfindung sind die Federkraft und die Reibflächenpaarung, gebildet aus erster Innenfläche des Sensorgehäuses und daran anliegender Fläche des Koppelelements, so auslegbar, dass der Ultraschallsensor im nicht montierten Zustand von Hand verschiebbar ist und/oder die Federkraft und die Reibflächenpaarung, gebildet aus zweiter Innenfläche des Sensorgehäuses und daran anliegender Fläche des Führungsbügels, sind so auslegbar, dass der Ultraschallsensor im nicht montierten Zustand von Hand nicht verschiebbar ist. Der Ultraschallsensor ist z.B. im Sensorgehäuse sowohl im montierten, als auch im nicht montierten Zustand, mindestens gegen eine Kraft von der doppelten Erdbeschleunigung mal dem Eigengewicht des Ultraschallsensors in Richtung einer axialen Verschiebung im Sensorgehäuse sicherbar. Im montierten Zustand kann die Kraft, gegen die der Sensor sicherbar ist, auch weitaus höher sein.

Eine weitere vorteilhafte Weiterbildung der erfindungsgemäßen Lösung besteht darin, dass die Federkraft der Feder so bemessen ist, dass der Ultraschallsensor mittels eines Werkzeugs verschiebbar ist.

Analog zum vorigen Ausführungsbeispiel, kann der Ultraschallsensor erst bei Kräften verschiebbar ausgestaltet sein, die z.B. nicht mit bloßer Handkraft, die jedoch mit einem Werkzeug aufbringbar sind.

Gemäß einer vorteilhaften Weiterbildung des erfindungsgemäßen Ultraschallsensors wird vorgeschlagen, dass das Koppelement Anschlagnasen aufweist, welche Anschlagnasen an die erste Innenfläche des Sensorgehäuses anlegbar sind.

So können z.B. Teile des Vorlaufkörpers bzw. des Koppelelements im nicht montierten Zustand des Ultraschallsensors an der Gehäuseinnenseite, gebildet von der ersten Innenfläche des Sensorgehäuses anstehen. Die Anschlagsnasen definieren somit die Flächen, mit welchen das Koppelelement an der ersten Innenfläche anliegt und insofern daran reibt. Diese Reibflächenpaare sind wiederum in vorher beschriebener Art und Weise auslegbar.

Bei einer weiteren vorteilhaften Weiterbildung der Erfindung weist das Sensorgehäuse auf einer Außenfläche des Sensorgehäuses, welche Außenfläche zusammen mit der ersten Innenfläche des Sensorgehäuses einen Teil der Sensorgehäusewand begrenzt, eine Dichtung und zumindest einen Anschlag auf, welcher Anschlag im montierten Zustand des Ultraschallsensors an ein Messrohr anlegbar ist und zwischen Sensorgehäuse und Messrohr einen Abstand h definiert, bis zu welchem Abstand h die Dichtung zwischen Sensorgehäuse und Messrohr eindrückbar ist.

Das Sensorgehäuse besteht beispielsweise aus einem rohrförmigen Mittelteil, z.B. ein Vierkantrohr, mit zunächst offenen Enden. Diese Enden werden von Endkappen verschlossen. Die Endkappen stehen nun ein Stück über die dem Messrohr im montierten Zustand zugewandte Außenfläche des Sensorgehäuses über. Somit bilden die Endkappen den Anschlag, der im montierten Zustand am Messrohr anliegt und den Abstand h zwischen Messrohr und Messrohr zugewandte Seite des Sensorgehäuses definiert. Der Abstand h entspricht somit der Länge des Überstands.

Eine alternative Lösung zur Bildung des Anschlags stellen die Ultraschallsensoren selbst dar. Die Sensoren sind federnd im Sensorgehäuse gelagert, sie lassen sich also in Richtung des von dem Sensorgehäuse umschlossenen Innenraums des Sensorgehäuses einfedern, so kann durch eine Begrenzung dieser Einfederung ein Überstand der Ultraschallsensoren über die dem Messrohr in montiertem Zustand des Messsystems zugewandte Seite des Sensorgehäuses hergestellt sein, welcher Überstand insbesondere die vorgebbare Höhe h aufweist und somit ein Eindrücken der umgebenden Dichtung auf h begrenzt.

Eine sehr vorteilhafte Ausgestaltung der Erfindung ist darin zu sehen, dass eine Dichtung zwischen Messrohr und Sensorgehäuse auf der dem Messrohr zugewandten Sensorgehäusewand anordenbar ist. Üblicherweise ist bei einem Clamp-On-Ultraschallsensor ein Koppelfett zwischen Ultraschallsensor und Messrohr angebracht. Dieses ist meist nicht gegenüber Witterung geschützt. So kann es häufig zu Messstörungen kommen aufgrund mangelndem oder fehlerhaftem Koppelfett und die Wartungsintervalle sind sehr kurz. Eine Dichtung zwischen Sensorgehäuse und Messrohr schützt das Koppelfett vor Austrocknung, Verdunstung, direkter Sonneneinstrahlung, Wasser oder andere Witterung.

Bevorzugt ist die Dichtung als Dichtlippe um den Spalt, durch welchen zumindest der erste Ultraschallsensor heraus ragt, geführt. Dabei können unterschiedlichste Ausführungen und Materialen zum Einsatz kommen. Beliebige Arten von O-Ringen sind zu Dichtzwecken bekannt geworden oder eine einfache Schicht an dichtendem Silikon kann aufgebracht werden.

In einer weiteren Ausgestaltung ist die Dichtung zwischen Messrohr und Sensorgehäuse elektrisch leitfähig und/oder elektrisch leitfähig beschichtet. Ist das Sensorgehäuse aus Metall und/oder leitfähig beschichtet, kann der Ultraschallsensor durch den Spalt elektromagnetische Störungen von außen empfangen. Ist das Messrohr ebenfalls aus Metall gefertigt und/oder leitfähig beschichtet, kann mit einer leitfähigen und/oder leitfähig beschichteten Dichtung eine bessere Abschirmung gegen elektromagnetische Störungen erzielt werden. Dazu könnte eine Kunststoff-Dichtung z.B. mit einem Spray leitfähig beschichtet werden. Gleichermaßen ließe sich ein Kunststoffmessrohr, zumindest an der von der Dichtung umschlossenen Fläche, elektrisch leitfähig beschichten. Zusammen mit dem ebenfalls leitfähigen und/oder leitfähig beschichteten Sensorgehäuse ist somit ein faraday'scher Käfig gebildet.

Gemäß einer weiteren vorteilhaften Weiterbildung der erfindungsgemäßen Lösung weist das Sensorgehäuse auf der Außenfläche des Sensorgehäuses, welche Außenfläche zusammen mit der ersten Innenfläche des Sensorgehäuses einen Teil der Sensorgehäusewand begrenzt, zumindest einen Anschlag auf, welcher Anschlag im montierten Zustand des Messsystems an ein Messrohr anlegbar ist und zwischen Sensorgehäusewand und Messrohr einen Abstand h definiert, bis zu welchem Abstand h der Teil des Koppelelements mit der Fläche zur Ein- und/oder Auskopplung der Ultraschallsignale des Ultraschallsensors im montierten Zustand aus dem Sensorgehäuse herausragt. Stehen die Sensoren im nicht montierten Zustand mit einem Abstand größer h über die dem Messrohr im montiertem Zustand des Messsystems zugewandte Seite des Sensorgehäuses über, so kann der Überstand im montierten Zustand des Messsystems auf die Höhe h des Anschlags begrenzt werden, der beispielsweise aus mindestens einer Endkappe des Sensorgehäuses bildbar ist und im montierten Zustand am Messrohr anliegt.

Weiter wird die der Erfindung zugrunde liegende Aufgabe gelöst durch ein Messsystem mit mindestens einem erfindungsgemäßen Ultraschallsensor und mindestens einer Regel-/Auswerteeinheit, welche anhand von Ultraschall-Messsignalen bzw. anhand von Messdaten, welche aus den Ultraschall-Messsignalen abgeleitet sind, den Volumen- und/oder den Massenstrom des in dem Messrohr strömenden Messmediums ermittelt, wobei der Durchfluss mit einem Laufzeitdifferenzverfahren oder Dopplerverfahren ermittelbar ist.

Gemäß einer vorteilhaften Weiterbildung des erfindungsgemäßen Messsystems ist der Ultraschallsensor mittels eines Sensorhalters am Messrohr ausrichtbar und befestigbar.

Die Erfindung wird anhand der nachfolgenden Figuren näher erläutert.
- Fig. 1: zeigt teilgeschnitten einen erfindungsgemäßen Ultraschallsensor,
- Fig. 2: zeigt perspektivisch einen erfindungsgemäßen Ultraschallsensor,
- Fig. 3: zeigt einen erfindungsgemäßen Ultraschallsensor im Querschnitt,
- Fig. 4: zeigt einen erfindungsgemäßen Ultraschallsensor im Längsschnitt,
- Fig. 5: zeigt perspektivisch ein erfindungsgemäßes Messsystem auf einem Messrohr montiert.

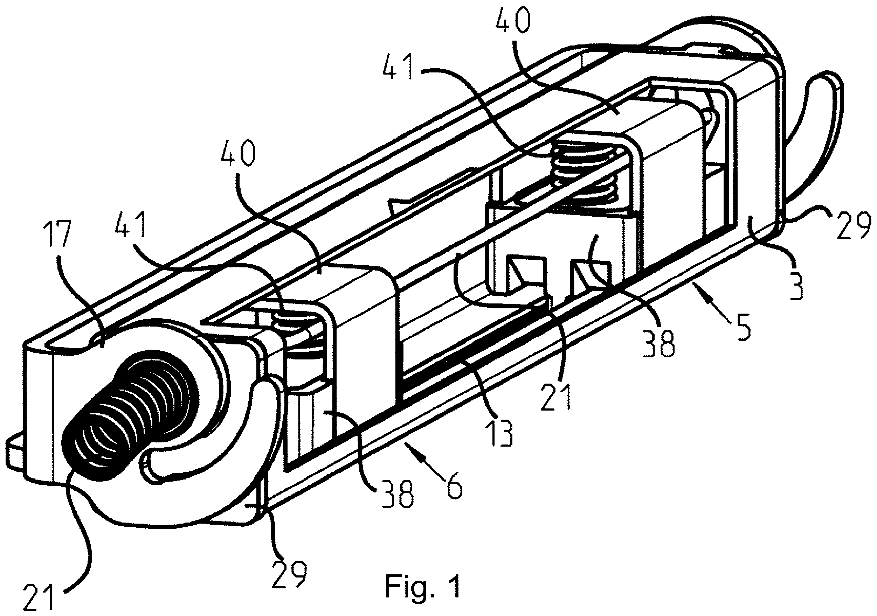

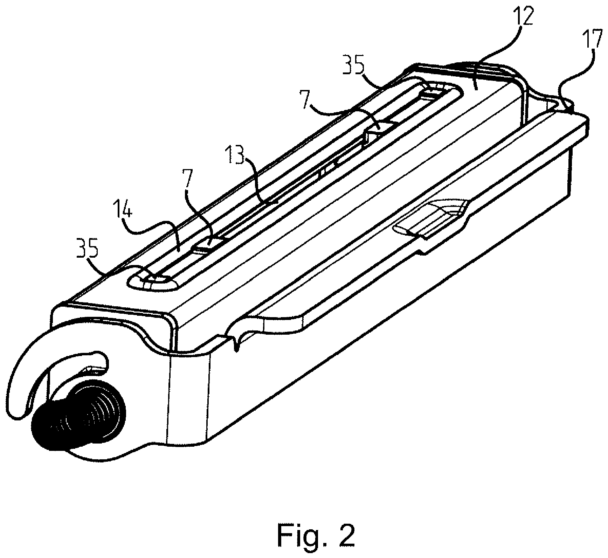

In Fig.1 ist ein erfindungsgemäßes Ultraschallsensorgehäuse 3 perspektivisch dargestellt. Das Gehäuse 3 beherbergt zwei Ultraschallsensoren 5, 6 wobei der erste Ultraschallsensor 5 verschiebbar im Gehäuse 3 gelagert ist. Das Sensorgehäuse 3 ist teilgeschnitten. Zu sehen sind die Koppelelemente 38 der beiden Ultraschallsensoren 5, 6, die Führungsbügel 40 und die zwischen Koppelelementen 38 und Führungsbügeln 40 angebrachten Federn 41. Der verschiebbare erste Ultraschallsensor 5 ist im Spalt 13 im Sensorgehäuse 3 geführt. Der Spalt 13 verläuft in Längsrichtung des länglichen Sensorgehäuses 3. Der Ultraschallwandler 5 ist dementsprechend in Längsrichtung des Sensorgehäuses 3 verschiebbar. Abgeschlossen ist das vierkantrohrförmige Sensorgehäuse 3 von Endkappen 29. Diese Endkappen 29 stehen mit einem Abstand h über die Außenfläche 12 des Sensorgehäuses über und bilden so den Anschlag 15, wie in Fig. 2 zu sehen. Neben den bereits beschriebenen Merkmalen ist ein Anschlusskabel 21 im Sensorgehäuse 3 und aus dem Sensorgehäuse 3 geführt. Damit werden die Signale zum bzw. vom elektromechanischen Wandlerelement geleitet. Mittels eines Spannbügels 17, der Teil eines Befestigungsmechanismus ist, ist das Sensorgehäuse 3 auf ein Messrohr aufspannbar.

Das Innere des Sensorgehäuses 3 ist für den Benutzer lediglich über den Spalt 13 zerstörungsfrei zugänglich, wie in Fig. 2 veranschaulicht. Es ist bis auf den Spalt 13 nach außen dicht. Das Sensorgehäuse 3 wird mit der ersten Sensorgehäusewand bzw. der Außenfläche 12 Richtung Messrohr 2 an einem Sensorhalter 4 angebracht. Da der Spalt 13 im montierten Zustand des Messsystems 1 jedoch nach außen abgedichtet ist, sind die Sensoren 5, 6 nicht mehr für den Benutzer zugänglich. Somit ist kein Verschieben der Ultraschallsensoren 5, 6 mit ihren empfindlichen Schallein- und -auskoppelflächen 7 auf dem Messrohr 2 möglich, womit diese gegen mechanische Beschädigungen von außen, wie z.B. gegen Verkratzen gesichert sind.

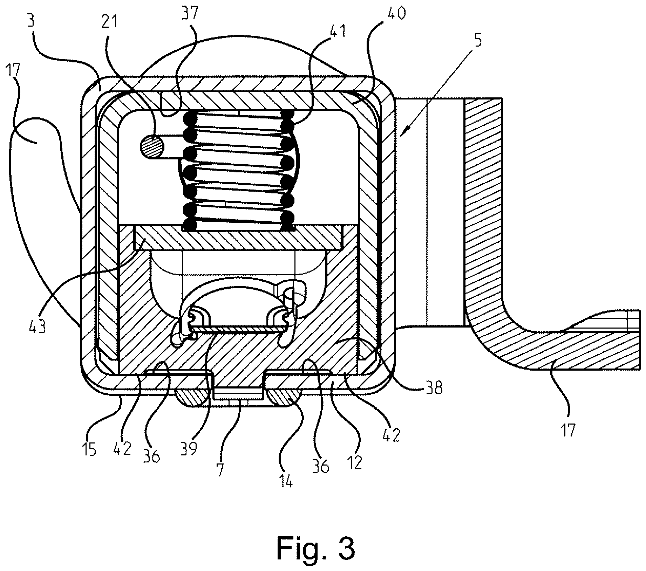

Fig. 3 zeigt den Ultraschallsensor 5 im Querschnitt. Das Sensorgehäuse 3 umschließt den Ultraschallsensor 5. Das Koppelelement 38 weist eine Fläche zur Ein-/Auskopplung 7 von Ultraschallsignalen auf. Ein Teil des Koppelelements 38 ragt in den Spalt 13 des Sensorgehäuses hinein und wird in diesem geführt, wobei die Fläche zur Ein-/Auskopplung 7 von Ultraschallsignalen aus dem Spalt wieder herausragt und über die Außenseite 12 des Sensorgehäuses 3 übersteht. Umringt ist der Spalt 13 auf der Außenseite 12 des Sensorgehäuses von einer Dichtung 14. Sowohl die Dichtung 14 als auch der Teil des Koppelelements 38, welcher aus dem Spalt herausragt, stehen über den Anschlag 15 der Höhe in Richtung von der Außenfläche 12 des Sensorgehäuses über. Außerhalb des Sensorgehäuses 3 ist ein Spannbügel 17 drehbar am Sensorgehäuse 3 gelagert angebracht.

Im Sensorgehäuse 3 ist das Koppelelement 38 in einem Führungsbügel 40 verschiebbar gelagert. Das Koppelelement 38 liegt mit seinen Anschlagsnasen 42 an der ersten Innenfläche 36 des Sensorgehäuses 3 an. Der Führungsbügel 40 liegt an der zweiten Innenfläche 37 des Sensorgehäuses an. Dazwischen in eine Feder 41 angebracht. Die Feder 41 ist auf der einen Seite mit dem Führungsbügel 40 verbunden, auf der anderen Seite mit der Abdeckung 43 des Koppelelements 38.

Der Ultraschallsensor 5 ist so ausgestaltet, dass er in Richtung in die Zeichenebene hinein und/oder aus dieser heraus, also in Längsrichtung des Sensorgehäuses 3 verschiebbar ist. Wird der Ultraschallsensor 5 in Richtung Innenraum des Sensorgehäuses 3 verschoben, federt die Feder entsprechend ein. Die Anschlagnasen 42 des Koppelements 38 heben sich von der ersten Innenfläche 36 des Sensorgehäuses ab, da sich das Koppelelement 38 in dem Führungsbügel 40 geführt in Richtung der zweiten Innenfläche 37 des Sensorgehäuses 3 verschiebt. Somit ist die Reibung zwischen Anschlagnasen 42 und erster Innenfläche 36 des Sensorgehäuses 3 aufgehoben und der Ultraschallsensor 5 lässt sich in Längsrichtung des Sensorgehäuses 3 verschieben. Ist dieser an der gewünschten Position und wird der Druck auf das Koppelelement 38 in Richtung der zweiten Innenfläche 37 des Sensorgehäuses 3 gelöst, federt die Feder 41 aus und die nun wieder hergestellte Reibung zwischen Anschlagnasen 42 und erster Innenfläche 36 des Sensorgehäuses 3 sichert den Ultraschallsensor vor weiteren Verschiebungen in Längsrichtung des Sensorgehäuses. Die Abdeckung 43 des Koppelements 38 erfüllt einerseits den Zweck, die Feder mit dem Koppelement zu verbinden und andererseits das elektromechanische Wandlerelement zu schützen und/oder abzuschirmen. Elektrische Verbindungskabel 21 werden im Sensor wie abgebildet geführt.

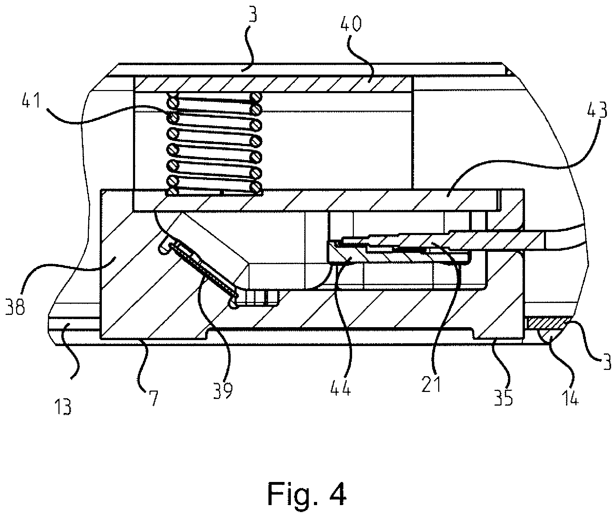

In Fig. 4 ist der Ultraschallsensor 5 im Längsschnitt dargestellt. Die Stützfläche 35 liegt in einer Ebene mit der Schalleinkoppel- bzw. Schallauskoppelfläche 7. Im montierten Zustand stehen beide Flächen 7, 35 in Kontakt mit dem Messrohr 2. Die Fläche des elektromechanischen Wandlers 39, hier ein piezoelektrisches Element, ist größer als die senkrecht auf das Ultraschall-Wandlerelement 39 projizierte Fläche 7 zur Ein- und/oder Auskopplung der Ultraschallsignale des Ultraschallsensors 5.

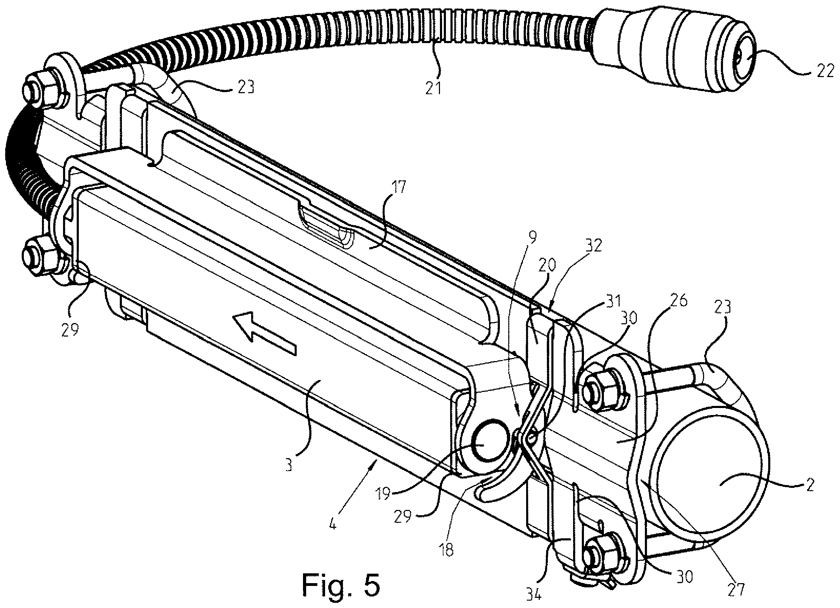

Fig. 5 offenbart ein Messsystem 1 mit erfindungsgemäßen Ultraschallsensor 5 im montierten Zustand auf einem Messrohr 2, bestehend aus einem Sensorgehäuse 3 und einem Sensorhalter 4. Die Ultraschallsensoren sind vom Sensorgehäuse 3 umgeben und liegen mit ihren Schallein- bzw. Schallauskoppelflächen auf dem Messrohr auf. Daher sind sie in dieser Darstellung nicht zu sehen. Dies zeigt jedoch, dass die Ultraschallsensoren von außen für den Benutzer nicht zugänglich und damit nicht verschiebbar sind und dass sie vor mechanischen Einflüssen von außen gut geschützt sind. Vom Sensorgehäuse 3 weg führt ein Anschlusskabel 21 mit einem Anschlussstecker 22 zum Anschluss der Ultraschallsensoren an eine Regel-/Auswerteeinheit. Die Regel-/Auswerteeinheit selbst ist der Einfachheit halber nicht dargestellt. Der Sensorhalter 4 ist mit U-Bügeln 23 am Messrohr 2 festgespannt. Die U-Bügel 23 können aus elastischem Material mit einer federnden Wirkung sein oder, wie hier dargestellt, aus einem relativ formstabilen Stahl. Sie werden über Schraubverbindungen mit dem Sensorhalter 4 verbunden.

Durch die besondere Konstruktion des Sensorhalters 4 wird das Messrohr 2 durch die notwendige Spannkraft der U-Bügel 23 nicht deformiert. Der Sensorhalter 4 ist als Befestigungsblech 26 ausgeführt, welches einen Schlitz 30 zur Kräftetrennung zwischen dem Bereich der Aufnahme des Sensorgehäuses 3 und dem Bereich der Aufnahme 32 der Befestigungsmittel aufweist. Als Befestigungsmittel sind U-Bügel 23 vorgesehen. Die Aufnahmen 32 der Befestigungsmittel weisen Bohrungen zur Befestigung der U-Bügel auf und Führungen 34 zur Führung von Spannbändern. Beide Aufnahmen ermöglichen die Befestigung des Befestigungsblechs 26 am Messrohr mittels bestimmten Kräften. Die Aufnahmen stehen dabei etwas über die am Messrohr 2 anliegenden Flächen des Sensorhalters 26 über, d.h. die Ränder der Spannbandführungen 34 und die Bohrungen zur Aufnahme der U-Bügel 23 berühren nicht das Messrohr 2 und bieten daher eine gewisse Federwirkung. Somit werden beispielsweise Kräfte, die das Rohr deformieren könnten, welche z.B. bei der Montage irrtümlich über das Anzugsdrehmoment der U-Bügel 23 oder die Spannung der Spannbänder aufgebracht werden, vom Befestigungsblech abgefedert und daher nur abgemildert auf das Rohr übertragen. Das Befestigungsblech 26 bietet eine gewisse Flexibilität und Elastizität. Durch die Schlitze 30 wird einerseits diese Elastizität erhöht und andererseits werden die Kräfte zur Befestigung des Sensorhalters 26 am Messrohr 2 vom Befestigungsmechanismus zur Befestigung des Sensorgehäuses am Messrohr 2 abgekoppelt. Die Schlitze 30 führen dabei bevorzugt von den Rändern des Befestigungsblechs bis zu den Flächen des Befestigungsblechs, die in Kontakt zu dem Messrohr 2 stehen.

Weiter weist das Befestigungsblech 26 neben der prismatischen Aussparung 27, welche als erste Funktionsfläche zur Ausrichtung des Sensorhalters 4 bzw. des Befestigungsblechs 26 am Messrohr 2 dient, eine zweite Funktionsfläche zur Ausrichtung des Sensorgehäuses 3 am Sensorhalter 4 bzw. am Messrohr 2 auf. Das Sensorgehäuse 3 wird zwischen Seitenlaschen des Befestigungsblechs 26 als zweite Funktionsfläche platziert. Durch eine Aussparung im Sensorhalter 26, welche zwischen den Seitenlaschen liegt, tritt das Sensorgehäuse 3 mit dem Messrohr 2 in Kontakt. Über ein Federblech 20 mit einem Stift 31 wird das Sensorgehäuse 3 auf dem Befestigungsblech 26 befestigt. Federblech 20 mit Stift 31 bilden den ersten Teil des Befestigungsmechanismus 9. Der drehbar am Sensorgehäuse 3 gelagerte Spannbügel 17 ist ein weiterer Teil des Befestigungsmechanismus 9. Das Federblech 20 kann dabei integraler Bestandteil des Sensorhalters, oder wie hier, ein am Befestigungsblech 26 zu befestigendes Teil sein. Der Stift 31 ist in diesem Falle ebenfalls mit dem Federblech 20 Stoff-, form- oder Kraftschlüssig verbunden.

Sensorgehäuse 3 und Sensorhalter 4 so ausgestaltet, dass das Sensorgehäuse 3 im Sensorhalter 4 zum Messrohr 2 hin ausrichtbar und lösbar feststellbar ist. Dazu wird das Sensorgehäuse 3 in Aussparung zwischen Seitenlaschen des Sensorhalters 4 eingesetzt. Der Spannbügel 17 steht dabei in Ausgangsstellung. Durch das Umlegen des Spannbügels 17 bis zur Endstellung greift der Spannbügel 17 mit seiner exzentrischen Aussparung 18 in das Federblech 20 mit Stift 31 ein. Die exzentrische Aussparung 18 wird also um den Stift 31 geführt. Durch die Exzentrizität der Aussparung 18 wird beim Umlegen des Spannbügels 17 das Sensorgehäuse 3 in Richtung Messrohr 2 gezogen und so auf das Messrohr 2 gedrückt. Dabei wird die Dichtung bis zur Höhe h des Anschlags zusammen gedrückt, womit sie das Sensorgehäuse 3 zusammen mit dem Messrohr 2 nach außen abdichtet, und die Ultraschallsensoren 5, 6, welche im nicht montierten Zustand aus dem Sensorgehäuse 3 über die Höhe h herausstehen, werden ebenfalls bis zur Höhe h, mit welcher sie im montierten Zustand über die Sensorgehäusewand 12 ragen, des Anschlags in das Sensorgehäuse 3 verschoben. Das Sensorgehäuse 3 besteht hier aus einem Vierkantrohr mit Endkappen 29, welche das Vierkantrohr an seinen Enden verschließen. Die Endkappen 29 stehen hier auf der Seite der ersten Sensorgehäusewand 12 etwas über und bilden so einen Anschlag mit der Höhe h.

Wird das Sensorgehäuse 3 auf ein Messrohr 2 gedrückt, treten die Endkappen 29 bzw. die Anschläge direkt in Kontakt mit dem Messrohr 2. Die dem Messrohr zugewandte Sensorgehäusewand 12 hat somit einen Abstand h zum Messrohr.

Vor dem Aufsetzen des Sensorgehäuses 3 wird eine nicht dargestellte Koppelmatte zwischen Sensorgehäuse 3 und Messrohr 2 angebracht oder es wird ein Koppelfett zwischen Sensorgehäuse 3 und Messrohr 2 angebracht. Durch die federnde Wirkung des Federblechs 20 ist das Sensorgehäuse 3 mit einer vorgegebenen Kraft auf dem Messrohr lösbar festgestellt und garantiert das Anliegen des Sensorgehäuses 3 am Messrohr 2. Gleichzeitig ist der Sensorhalter 4 als Befestigungsblech 26 mit Schlitzen 30 ausgestattet, so dass die Kräfte, mit denen das Befestigungsblech 26 an dem Messrohr 2 angebracht ist, von dem Befestigungsmechanismus 9 des Sensorgehäuses 3 am Befestigungsblech 26 bzw. am Messrohr 2 abgekoppelt. Durch die Form der exzentrischen Aussparung 18 im Spannbügel ist die elastische Befestigung des Sensorgehäuses 3 am Sensorhalter 4 bzw. am Messrohr 2 selbsthemmend.

Außer mit dem dargestellten Spannbügel 17, welcher zusammen mit dem Federblech 20 den Befestigungsmechanismus 9 bildet, sind weitere Befestigungsmechanismen 9 denkbar. So ist das Sensorgehäuse z.B. mittels federnden Spannbändern auf das Messrohr aufschnallbar oder die Befestigung erfolgt mittels Magneten am Sensorhalter.

### Bezugszeichenliste

- 1: Durchfluss-Messsystem
- 2: Messrohr
- 3: Sensorgehäuse
- 4: Sensorhalter
- 5: Erster Ultraschallsensor
- 6: Zweiter Ultraschallsensor
- 7: Uitraschalleinkoppelfläche/Uitraschallauskoppelfläche
- 8: Regel-/Auswerteeinheit
- 9: Befestigungsmechanismus
- 10: Erste Funktionsfläche
- 11: Zweite Funktionsfläche
- 12: Erste Sensorgehäusewand
- 13: Spalt im Sensorgehäuse
- 14: Dichtung
- 15: Anschlag
- 16: Aussparung im Sensorhalter
- 17: Spannbügel
- 18: Exzentrische Aussparung des Spannbügels
- 19: Drehachse des Spannbügels
- 20: Federblech mit Stift
- 21: Anschlusskabel
- 22: Anschlussstecker
- 23: U-Bügel
- 24: Spannband
- 25: Messmedium
- 26: Befestigungsblech
- 27: Prismatische Aussparung
- 28: Seitenlaschen
- 29: Endkappe
- 30: Schlitz im Befestigungsblech
- 31: Stift im Federblech
- 32: Aufnahme der Befestigungsmittel
- 33: Bohrung
- 34: Spannbandführung
- 35: Stützfläche
- 36: Erste Innenfläche des Sensorgehäuses
- 37: Zweite Innenfläche des Sensorgehäuses
- 38: Koppelelement
- 39: Elektromechanisches Wandlerelement
- 40: Führungsbügel
- 41: Feder
- 42: Anschlagnasen
- 43: Abdeckung des Koppelelements
- 44: Anschlussprint

## Patentansprüche

1. Vorrichtung zur Bestimmung und/oder Überwachung des Durchflusses eines Messmediums durch ein Messrohr (2), mit einem Sensorgehäuse (3) und mit einem im Sensorgehäuse (3) angeordneten Ultraschallsensor (5), welcher Ultraschallsensor (5) ein Koppelelement (38) und ein elektromechanisches Ultraschall-Wandlerelement (39) aufweist,
**dadurch gekennzeichnet, dass**
das Sensorgehäuse in einer ersten Innenfläche (36) des Sensorgehäuses einen Spalt (13) aufweist, in welchen Spalt (13) der Ultraschallsensor (5) hineinragt und welcher Ultraschallsensor (5) in dem Sensorgehäuse (3) parallel zu der ersten Innenfläche (36) des Sensorgehäuses (3) in Längsrichtung des Sensorgehäuses verschiebbar gelagert ist,
wobei sich der Spalt (13) in Längsrichtung des Sensorgehäuses erstreckt,
wobei das Koppelelement (38) mittels Anschlagnasen (42) an der ersten Innenfläche (36) des Sensorgehäuses (3) angelegt ist
und dass ein Führungsbügel (40) des Sensorgehäuses an einer der ersten Innenfläche (36) gegenüberliegenden zweiten Innenfläche (37) des Sensorgehäuses (3) anliegt, wobei der Ultraschallsensor (5) senkrecht zur ersten Innenfläche (36) in dem Führungsbügel (40) verschiebbar gelagert ist,
wobei eine Feder (41) des Sensorgehäuses zwischen Führungsbügel (40) und Ultraschallsensor (5) senkrecht zur ersten Innenfläche (36) wirkt,
wobei zumindest ein Teil des Koppelelements (38) mit einer Fläche (7) zur Ein- und/ oder Auskopplung der Ultraschallsignale des Ultraschallsensors (5) in den Spalt (13) hineinragt, wobei die Fläche (7) dazu eingerichtet ist, mit dem Messrohr kontaktiert zu werden.

2. Vorrichtung nach Anspruch 1,
**dadurch gekennzeichnet,**
**dass** das elektromechanische Ultraschall-Wandlerelement (39) größer ist als die senkrecht auf das Ultraschall-Wandlerelement (39) projizierte Fläche (7) zur Ein- und/oder Auskopplung der Ultraschallsignale des Ultraschallsensors (5).

3. Vorrichtung nach einem der Ansprüche 1 bis 2,
**dadurch gekennzeichnet,**
**dass** die Federkraft der Feder (41) so bemessen ist, dass der Ultraschallsensor (5) von Hand verschiebbar ist.

4. Vorrichtung nach einem der Ansprüche 1 bis 3,
**dadurch gekennzeichnet,**
**dass** die Federkraft der Feder (41) so bemessen ist, dass der Ultraschallsensor (5) mittels eines Werkzeugs verschiebbar ist.

5. Vorrichtung nach einem der Ansprüche 1 bis 4,
**dadurch gekennzeichnet,**
**dass** das Koppelement (38) Anschlagnasen (42) aufweist, welche Anschlagnasen (42) an der ersten Innenfläche (36) des Sensorgehäuses (3) anliegen.

6. Vorrichtung nach Anspruch 1,
**dadurch gekennzeichnet,**
**dass** das Sensorgehäuse (3) auf einer Außenfläche (12) des Sensorgehäuses (3), welche Außenfläche (12) zusammen mit der ersten Innenfläche (36) des Sensorgehäuses (3) einen Teil der Sensorgehäusewand begrenzt, eine Dichtung (14) und zumindest einen Anschlag (15) aufweist, welcher Anschlag (15) im montierten Zustand des Ultraschallsensors (5) an ein Messrohr (2) anlegbar ist und zwischen Sensorgehäuse (3) und Messrohr (2) einen Abstand h definiert, bis zu welchem Abstand h die Dichtung (14) zwischen Sensorgehäuse (3) und Messrohr (2) eindrückbar ist.

7. Vorrichtung nach einem der Ansprüche 1 bis 6,
**dadurch gekennzeichnet,**
**dass** das Sensorgehäuse (3) auf der Außenfläche (12) des Sensorgehäuses (3), welche Außenfläche (12) zusammen mit der ersten Innenfläche (36) des Sensorgehäuses (3) einen Teil der Sensorgehäusewand begrenzt, zumindest einen Anschlag (15) aufweist, welcher Anschlag (15) im montierten Zustand des Ultraschallsensors (5) an ein Messrohr (2) anlegbar ist und zwischen Außenfläche (12) der Sensorgehäusewand und Messrohr (2) einen Abstand h definiert, bis zu welchem Abstand h der Teil des Koppelelements (36) mit der Fläche (7) zur Ein- und/oder Auskopplung der Ultraschallsignale des Ultraschallsensors (5) im montierten Zustand aus dem Sensorgehäuse (3) herausragt.

8. Messsystem (1) mit mindestens einer Vorrichtung nach einem der Ansprüche 1 bis 7 und mindestens einer Regel-/Auswerteeinheit (8), die derart ausgestaltet ist, dass sie anhand von
Ultraschall-Messsignalen bzw. anhand von Messdaten, welche aus den Ultraschall-Messsignalen abgeleitet sind, den Volumen- und/oder den Massenstrom des in dem Messrohr (2) strömenden Messmediums ermittelt,
wobei
der Durchfluss mit einem Laufzeitdifferenzverfahren oder Dopplerverfahren ermittelbar ist.

9. Messsystem (1) nach Anspruch 8,
**dadurch gekennzeichnet,**
**dass** das Sensorgehäuse (3) mittels eines Sensorhalters (4) am Messrohr (2) ausrichtbar und befestigbar ist.

10. Messsystem (1) nach einem der Ansprüche 8 oder 9,
**dadurch gekennzeichnet,**
**dass** das Sensorgehäuse (3) mindestens einen weiteren Ultraschallsensor (6) umschließt, wobei zumindest der erste Ultraschallsensor (5) verschiebbar im Sensorgehäuse (3) gelagert ist.

## Claims

1. Apparatus for determining and/or monitoring the flow of a medium through a measuring tube (2), with a sensor housing (3) and with an ultrasonic sensor (5) arranged in the sensor housing (3), said ultrasonic sensor (5) having a coupling element (38) and an electromechanical ultrasonic transducer element (39),
**characterized in that**
the sensor housing has a slot (13) in a first interior area (36) of the sensor housing, wherein the ultrasonic sensor (5) projects into said slot (13) and wherein the ultrasonic sensor (5) is mounted in the sensor housing (3) parallel to the first interior area (36) of the sensor housing (3) in a manner in which it can move in the longitudinal direction of the sensor housing,
wherein the slot (13) extends in the longitudinal direction of the sensor housing, wherein the coupling element (38) is applied using stop lugs (42) on the first interior area (36) of the sensor housing (3),
and **in that** a guide bracket (40) of the sensor housing rests against a second interior area (37) of the sensor housing (3), situated opposite the first interior area (36), wherein the ultrasonic sensor (5) is mounted in the guide bracket (40) perpendicular to the first interior area (36) in a manner in which it can be moved, wherein a spring (41) of the sensor housing between the guide bracket (40) and the ultrasonic sensor (5) acts perpendicular to the first interior area (36),
wherein at least a part of the coupling element (38) projects into the slot (13) with a surface (7) for coupling and/or decoupling the ultrasonic signals of the ultrasonic sensor (5), wherein the surface (7) is designed to be in contact with the measuring tube.

2. Apparatus as claimed in Claim 1;
**characterized in that**
the electromechanical ultrasonic transducer element (39) is greater than the surface (7), projected in a perpendicular manner onto the ultrasonic transducer element (39), for coupling and/or decoupling the ultrasonic signals of the ultrasonic sensor (5).

3. Apparatus as claimed in one of the Claims 1 to 2,
**characterized in that**
the spring force of the spring (41) is designed such that the ultrasonic sensor (5) can be moved by hand.

4. Apparatus as claimed in one of the Claims 1 to 3,
**characterized in that**
the spring force of the spring (41) is designed such that the ultrasonic sensor (5) can be moved using a tool.

5. Apparatus as claimed in one of the Claims 1 to 4,
**characterized in that**
the coupling element (38) has stop lugs (42), wherein said stop lugs (42) rest against the first interior area (36) of the sensor housing (3).

6. Apparatus as claimed in Claim 1,
**characterized in that**
the sensor housing (3) has a seal (14) and at least a stop (15) on an exterior surface (12) of the sensor housing (3), wherein said exterior surface (12) - together with the first interior area (36) of the sensor housing (3) - limits a part of the sensor housing wall, wherein, when the ultrasonic sensor (5) is in an installed state, said stop (15) can be applied to a measuring tube (2) and defines a distance h between the sensor housing (3) and the measuring tube (2), wherein the seal (14) can be pressed in between the sensor housing (3) and the measuring tube (2) as far as said distance h.

7. Apparatus as claimed in one of the Claims 1 to 6,
**characterized in that**
the sensor housing (3) has at least a stop (15) on the exterior surface (12) of the sensor housing (3), wherein said exterior surface (12) - together with the first interior area (36) of the sensor housing (3) - limits a part of the sensor housing wall, wherein, when the ultrasonic sensor (5) is in an installed state, said stop (15) can be applied to a measuring tube (2) and defines a distance h between the exterior surface (12) of the sensor housing wall and measuring tube (2), wherein the part of the coupling element (36) with the surface (7) designed to couple and/or decouple the ultrasonic signals of the ultrasonic sensor (5) in the mounted state projects out of the sensor housing (3) as far as said distance h.

8. Measuring system (1) with at least an apparatus as claimed in one of the Claims 1 to 7 and at least one control/evaluation unit (8), which is designed in such a way that it determines the volume flow and/or the mass flow of the medium flowing through the measuring tube (2) using ultrasonic measuring signals and/or using measuring data which are derived from the ultrasonic measuring signals, wherein the flow can be determined using a transit time difference method or a Doppler method.

9. Measuring system (1) as claimed in Claim 8,
**characterized in that**
the sensor housing (3) can be aligned and secured on the measuring tube (2) using a sensor holder (4).

10. Measuring system (1) as claimed in one of the Claims 8 or 9,
**characterized in that**
the sensor housing (3) comprises at least an additional ultrasonic sensor (6), wherein at least the first ultrasonic sensor (5) is mounted in the sensor housing (3) in a manner in which it can be moved.

## Revendications

1. Dispositif destiné à la détermination et/ou la surveillance du débit d'un produit mesuré à travers un tube de mesure (2), avec un boîtier de capteur (3) et avec un capteur à ultrasons (5) disposé dans le boîtier de capteur (3), lequel capteur à ultrasons (5) comprend un élément de couplage (38) et un élément convertisseur à ultrasons électromécanique (39),
**caractérisé**
**en ce que** le boîtier de capteur présente, dans une première surface intérieure (36) du boîtier de capteur, une fente (13) dans laquelle le capteur à ultrasons (5) pénètre, et lequel capteur à ultrasons (5) est logé dans le boîtier de capteur (3) de manière à pouvoir être déplacé parallèlement à la première surface intérieure (36) du boîtier de capteur (3), dans le sens longitudinal du boîtier de capteur,
la fente (13) s'étendant dans la direction longitudinale du boîtier de capteur, l'élément de couple (38) étant appliqué avec les ergots de butée (42) contre la première surface intérieure (36) du boîtier de capteur (3),
et **en ce qu'**un étrier de guidage (40) du boîtier de capteur repose contre une deuxième surface intérieure (37) du boîtier de capteur (3), située à l'opposé de la première surface intérieure (36), le capteur à ultrasons (5) étant logé de manière à pouvoir être déplacé perpendiculairement à la première surface intérieure (36) dans l'étrier de guidage (40),
un ressort (41) du boîtier de capteur agissant entre l'étrier de guidage (40) et le capteur à ultrasons (5) perpendiculairement à la première surface intérieure (36), au moins une partie de l'élément de couplage (38) pénétrant dans la fente (13) avec une surface (7) pour le couplage et/ou le découplage des signaux du capteur à ultrasons (5), la surface (7) étant conçue de telle sorte à être mise en contact avec le tube de mesure.

2. Dispositif selon la revendication 1 ;
**caractérisé**
**en ce que** l'élément convertisseur à ultrasons électromécanique (39) est supérieur à la surface (7) projetée perpendiculairement à l'élément convertisseur à ultrasons électromécanique (39), pour le couplage et/ou le découplage des signaux du capteur à ultrasons (5).

3. Dispositif selon l'une des revendications 1 à 2,
**caractérisé**
**en ce que** la force du ressort (41) est dimensionnée de telle sorte que le capteur à ultrasons (5) puisse être déplacé à la main.

4. Dispositif selon l'une des revendications 1 à 3,
**caractérisé**
**en ce que** la force du ressort (41) est dimensionnée de telle sorte que le capteur à ultrasons (5) puisse être déplacé au moyen d'un outil.

5. Dispositif selon l'une des revendications 1 à 4,
**caractérisé**
**en ce que** l'élément de couplage (38) présente des ergots de butée (42), lesquels ergots de butée (42) reposent contre la première surface intérieure (36) du boîtier de capteur (3).

6. Dispositif selon la revendication 1,
**caractérisé**
**en ce que** le boîtier de capteur (3) présente un joint (14) et au moins une butée (15) sur la surface extérieure (12) du boîtier de capteur (3), laquelle surface extérieure (12) limite, conjointement avec la première surface intérieure (36) du boîtier de capteur (3), une partie de la paroi du boîtier de capteur, laquelle butée (15) peut être appliquée, à l'état monté du capteur à ultrasons (5), contre un tube de mesure (2) et définit, entre le boîtier de capteur (3) et le tube de mesure (2), une distance h, distance h jusqu'à laquelle le joint (14) peut être enfoncé entre le boîtier de capteur (3) et le tube de mesure (2).

7. Dispositif selon l'une des revendications 1 à 6,
**caractérisé**
**en ce que** le boîtier de capteur (3) présente au moins une butée (15) sur la surface extérieure (12) du boîtier de capteur (3), laquelle surface extérieure (12) limite, conjointement avec la première surface intérieure (36) du boîtier de capteur (3), une partie de la paroi du boîtier de capteur, laquelle butée (15) peut être appliquée, à l'état monté du capteur à ultrasons (5), contre un tube de mesure (2) et définit, entre la surface extérieure (12) de la paroi de boîtier de capteur et le tube de mesure (2), une distance h définie, distance h jusqu'à laquelle la partie de l'élément de couplage (36) avec la surface (7) destinée au couplage et/ou au découplage des signaux du capteur à ultrasons (5) dépasse, à l'état monté, du boîtier de capteur (3).

8. Système de mesure (1) au moins un dispositif selon l'une des revendications 1 à 7 et au moins une unité de régulation / d'exploitation (8), laquelle est conçue de telle sorte à ce qu'elle détermine, au moyen des signaux de mesure à ultrasons ou au moyen des données de mesure, qui sont dérivées des signaux de mesure à ultrasons, le débit volumique et/ou le débit massique du produit s'écoulant dans le tube de mesure (2),
le débit pouvant être déterminé à l'aide d'un procédé de différence de temps de propagation ou d'un procédé Doppler.

9. Système de mesure (1) selon la revendication 8,
**caractérisé**
**en ce que** le boîtier de capteur (3) peut être positionné et fixé au moyen d'un support de capteur (4) sur le tube de mesure (2).

10. Dispositif selon l'une des revendications 8 ou 9,
**caractérisé**
**en ce que** le boîtier de capteur (3) comprend au moins un autre capteur à ultrasons (6), au moins le premier capteur à ultrasons (5) pouvant être logé dans le boîtier de capteur (3) de manière à pouvoir être déplacé.
